# EUROPÄISCHE PATENTSCHRIFT

(11) **EP 3 668 744 B1**
(45) Veröffentlichungstag und Bekanntmachung des Hinweises auf die Patenterteilung: **17.02.2021**
(21) Anmeldenummer: 18734489.0
(22) Anmeldetag: 19.06.2018
(51) Int. Cl.: B60L 3/00, B60R 16/03

(54) **BORDNETZ FÜR EIN KRAFTFAHRZEUG SOWIE VERFAHREN ZUM BETREIBEN EINES BORDNETZES FÜR EIN KRAFTFAHRZEUG**
ONBOARD ELECTRICAL SYSTEM FOR A MOTOR VEHICLE AND METHOD FOR OPERATING AN ONBOARD ELECTRICAL SYSTEM FOR A MOTOR VEHICLE
RÉSEAU DE BORD POUR UN VÉHICULE À MOTEUR ET PROCÉDÉ PERMETTANT DE FAIRE FONCTIONNER UN RÉSEAU DE BORD POUR UN VÉHICULE À MOTEUR

(30) Priorität: 18.08.2017 DE 102017214442
(43) Veröffentlichungstag der Anmeldung: 24.06.2020
(73) Patentinhaber: Audi AG, 85045 Ingolstadt (DE)
(72) Erfinder: MÜLLER, Kai, 74626 Bretzfeld (DE); SCHIEDERMEIER, Maximilian, 85049 Ingolstadt (DE); BREU, Martin, 91560 Heilsbronn (DE)
(86) Internationale Anmeldenummer: PCT/EP2018/066241
(87) Internationale Veröffentlichungsnummer: WO 2019/034303

(56) Entgegenhaltungen:
- DE-A1-102013 018 404
- DE-A1-102014 218 817
- DE-A1-102016 006 643
- DE-A1-102016 009 346

## Beschreibung

Die Erfindung betrifft ein Bordnetz für ein Kraftfahrzeug, mit einem Primärstromnetz und einem an das Primärstromnetz über einen Gleichspannungswandler elektrisch angeschlossenen Sekundärstromnetz, wobei das Primärstromnetz und das Sekundärstromnetz über eine Sperrdiode des Gleichspannungswandlers aneinander angeschlossen sind und die Sperrdiode ihre Durchlassrichtung von dem Primärstromnetz in Richtung des Sekundärstromnetzes aufweist, und wobei dem Sekundärstromnetz ein einen Messwiderstand aufweisender Isolationswächter zur Ermittlung eines Isolationsfehlers zugeordnet ist. Die Erfindung betrifft weiterhin ein Verfahren zum Betreiben eines Bordnetzes für ein Kraftfahrzeug.

Das Bordnetz dient dem Betrieb wenigstens eines elektrischen Verbrauchers des Kraftfahrzeugs. Das Bordnetz verfügt über wenigstens eine Spannungsquelle, idealerweise jedoch über mehrere Spannungsquellen. Beispielsweise ist jedem der Stromnetze, also sowohl dem Primärstromnetz als auch dem Sekundärstromnetz, jeweils eine Stromquelle zugeordnet. Bevorzugt dient das Bordnetz dem Betreiben einer Antriebseinrichtung des Kraftfahrzeugs, welche über wenigstens ein als elektrische Maschine ausgestaltetes Antriebsaggregat verfügt. Das Antriebsaggregat ist über das Bordnetz mit elektrischem Strom beaufschlagbar.

Die Antriebseinrichtung und mithin das Antriebsaggregat dienen dem Antreiben des Kraftfahrzeugs, insoweit also dem Bereitstellen eines auf das Antreiben des Kraftfahrzeugs gerichteten Antriebsdrehmoments. Selbstverständlich kann die Antriebseinrichtung als Hybridantriebseinrichtung ausgestaltet sein, welche zusätzlich zu dem Antriebsaggregat wenigstens ein weiteres Antriebsaggregat aufweist. Das Antriebsaggregat und das weitere Antriebsaggregat sind besonders bevorzugt unterschiedlichen Typs, beispielsweise liegt das weitere Antriebsaggregat in Form einer Brennkraftmaschine vor. Im Falle der Hybridantriebseinrichtung ist es besonders bevorzugt vorgesehen, dass das Antriebsaggregat und das weitere Antriebsaggregat das Antriebsdrehmoment wenigstens zeitweise gemeinsam bereitstellen.

Aus dem Stand der Technik ist beispielsweise die Druckschrift DE 10 2016 009 346 A1 bekannt. Diese betrifft eine Schaltungsanordnung für ein Kraftfahrzeug, umfassend: einen Brennstoffzellenstapel, eine Hochvoltbatterie, einen leistungselektronischen Energiewandler, über welchen der Brennstoffzellenstapel mit der Hochvoltbatterie unter Nutzung einer gemeinsamen Potenzialverbindung elektrisch gekoppelt ist, eine Isolationsüberwachungsvorrichtung, welche dazu ausgelegt ist, einen Isolationswiderstand zwischen der Schaltungsanordnung und einem davon betriebsmäßig elektrisch isolierten Erdpotenzial zu überwachen, und einen Kühlmittelkreislauf zur Kühlung des Brennstoffzellenstapels. Der Kühlmittelkreislauf ist elektrisch mit der gemeinsamen Potenzialverbindung gekoppelt, wobei die Isolationsüberwachungsvorrichtung zwischen die gemeinsame Potenzialverbindung und das Erdpotenzial geschaltet ist. Zur Verbesserung der Messgenauigkeit eines Isolationswiderstands in einem die Schaltungsanordnung umfassenden Hochvoltnetz wird vorgeschlagen, den Kühlmittelkreislauf auf die gemeinsame Potenzialverbindung zu legen und die Isolationsüberwachungsvorrichtung auf die gemeinsame Potenzialverbindung zu legen.

Es ist Aufgabe der Erfindung, ein Bordnetz für ein Kraftfahrzeug vorzuschlagen, welches gegenüber bekannten Bordnetzen Vorteile aufweist, insbesondere eine einfache und kostengünstige Überprüfung des Bordnetzes auf den Isolationsfehler mittels des Isolationswächters ermöglicht.

Dies wird erfindungsgemäß mit einem Bordnetz mit den Merkmalen des Anspruchs 1 erreicht. Dabei ist vorgesehen, dass der Sperrdiode zu ihrer Überbrückung ein Zusatzwiderstand parallel geschaltet ist, sodass mittels des Isolationswächters ein gemeinsamer Isolationsfehler des Primärstromnetzes und des Sekundärstromnetzes ermittelbar ist.

Das Primärstromnetz und das Sekundärstromnetz sind über den Gleichspannungswandler aneinander angeschlossen. Bevorzugt werden das Primärstromnetz und das Sekundärstromnetz zumindest zeitweise bei unterschiedlichen Spannungsniveaus betrieben, sodass in dem Sekundärstromnetz ein erstes Spannungsniveau und in dem Sekundärstromnetz ein von dem ersten Spannungsniveau verschiedenes zweites Spannungsniveau vorliegt. Der Gleichspannungswandler dient dem Übertragen von elektrischer Energie zwischen dem Primärstromnetz und dem Sekundärstromnetz und/oder umgekehrt.

Bevorzugt ist der Gleichspannungswandler ausschließlich zur Übertragung von elektrischer Energie aus dem Primärstromnetz in das Sekundärstromnetz ausgebildet, sodass also keine Übertragung von elektrischer Energie in die umgekehrte Richtung vorgesehen ist. Besonders bevorzugt liegt in dem Primärstromnetz eine erste Stromquelle vor, welche beispielsweise als Brennstoffzelle oder dergleichen ausgestaltet ist. Mittels der ersten Stromquelle kann elektrische Energie in dem Primärstromnetz bereitgestellt und über den Gleichspannungswandler zu dem Sekundärstromnetz übertragen werden.

Der Gleichspannungswandler weist die Sperrdiode auf, über welche das Primärstromnetz und das Sekundärstromnetz zumindest zeitweise elektrisch miteinander verbunden sind. In anderen Worten ist das Primärstromnetz über die Sperrdiode des Gleichspannungswandlers an das Sekundärstromnetz angeschlossen. Der Gleichspannungswandler ist vorzugsweise als Ladungspumpe ausgestaltet.

Dem Sekundärstromnetz ist der Isolationswächter zugeordnet, welcher zur Ermittlung des Isolationsfehlers vorgesehen ist. Der Isolationswächter verfügt über den Messwiderstand. Zum Überprüfen auf das Vorliegen des Isolationsfehlers verbindet der Isolationswächter einen elektrischen Pol des Sekundärstromnetzes über den Messwiderstand mit einem zweiten Pol, vorzugsweise einer elektrischen Masse. In anderen Worten ist der Pol des Sekundärstromnetzes über den Messwiderstand mit einer Karosserie des Kraftfahrzeugs elektrisch verbunden. Der Isolationswächter beaufschlagt das Sekundärstromnetz mit einer Prüfspannung. Ist das Sekundärstromnetz bereits bestromt, ist also die zweite Spannung von null verschieden, so wird die Prüfspannung dieser zweiten Spannung überlagert. Vorzugsweise beaufschlagt der Isolationswächter das Sekundärstromnetz periodisch mit der Prüfspannung, welche insoweit als Rechteckspannung vorliegen kann.

Während des Beaufschlagens des Sekundärstromnetzes mit der Prüfspannung wird die Stromstärke des durch den Messwiderstand fließenden elektrischen Stroms ermittelt. Weicht die Stromstärke von einer erwarteten Stromstärke ab beziehungsweise fällt an dem Messwiderstand eine höhere Spannung ab als erwartet, so wird auf das Vorliegen des Isolationsfehlers erkannt. In diesem Fall werden, insbesondere durch den Isolationswächter, geeignete Gegenmaßnahmen eingeleitet, beispielsweise erfolgt eine Fehleranzeige und/oder es wird ein Fehlereintrag in einen Fehlerspeicher eingeschrieben.

Im Falle des Bordnetzes mit dem Primärstromnetz und dem Sekundärstromnetz, die über den Gleichspannungswandler aneinander angeschlossen sind, kann mittels des Isolationswächters aufgrund der Sperrdiode zunächst nur das Sekundärstromnetz auf den Isolationsfehler überprüft werden. Um zusätzlich ein Überprüfen des Primärstromnetzes auf den Isolationsfehler zu ermöglichen, wird der Sperrdiode der Zusatzwiderstand parallel geschaltet. In anderen Worten überbrückt der Zusatzwiderstand die Sperrdiode elektrisch, sodass das Primärstromnetz und das Sekundärstromnetz über den Zusatzwiderstand elektrisch miteinander verbunden sind. Bei einer derartigen Ausgestaltung des Bordnetzes kann nun der Isolationswächter zum Ermitteln des gemeinsamen Isolationsfehlers des Primärstromnetzes und des Sekundärstromnetzes herangezogen werden.

Es erübrigt sich insoweit ein separater Isolationswächter, welcher dem Primärstromnetz zugeordnet ist und der Ermittlung eines Isolationsfehlers in diesem dient. Vielmehr ist es ausreichend, mittels des Isolationswächters auf das Vorliegen des gemeinsamen Isolationsfehlers der beiden Stromnetze zu prüfen. Dies ermöglicht eine kostengünstige Ausgestaltung des Bordnetzes. Vorzugsweise ist der Zusatzwiderstand hochohmig ausgestaltet, beispielsweise weist er einen Widerstand von mindestens 1 Kiloohm, besonders bevorzugt von mindestens 5 Kiloohm, mindestens 10 Kiloohm, mindestens 50 Kiloohm oder mindestens 100 Kiloohm auf. Mit einem derartigen hochohmigen Zusatzwiderstand wird die Funktion des Bordnetzes in keiner Weise beeinträchtigt.

Eine weitere Ausgestaltung der Erfindung sieht vor, dass das Primärstromnetz einen ersten Primärstromnetzanschluss und einen zweiten Primärstromnetzanschluss sowie das Sekundärstromnetz einen ersten Sekundärstromnetzanschluss und einen zweiten Sekundärstromnetzanschluss aufweist, wobei der erste Primärstromnetzanschluss und der erste Sekundärstromnetzanschluss über die Sperrdiode und den Zusatzwiderstand und der zweite Primärstromnetzanschluss und der zweite Sekundärstromnetzanschluss unmittelbar aneinander angeschlossen sind. Jedes der beiden Stromnetze verfügt insoweit über zwei Stromnetzanschlüsse, über welche die Stromnetze schlussendlich elektrisch aneinander angeschlossen sind.

Der zweite Primärstromnetzanschluss und der zweite Sekundärstromnetzanschluss sind unmittelbar und vorzugsweise permanent elektrisch miteinander verbunden und insbesondere mit der elektrischen Masse verbunden, bevorzugt ebenfalls permanent. An dem zweiten Primärstromnetzanschluss und dem zweiten Sekundärstromnetzanschluss liegt insoweit dasselbe elektrische Potenzial vor. Der erste Primärstromnetzanschluss und der erste Sekundärstromnetzanschluss sind hingegen lediglich mittelbar über die Sperrdiode und den Zusatzwiderstand aneinander angeschlossen, wobei die Sperrdiode und der Zusatzwiderstand elektrisch parallel zwischen den beiden Anschlüssen vorliegen. Auf die Vorteile einer derartigen Beschaltung des Bordnetzes beziehungsweise der beiden Stromnetze wurde vorstehend bereits hingewiesen.

Im Rahmen einer Weiterbildung der Erfindung ist vorgesehen, dass zwischen dem ersten Primärstromnetzanschluss und dem ersten Sekundärstromnetzanschluss ein Leistungsschalter des Gleichspannungswandlers in Reihe mit der Sperrdiode elektrisch angeschlossen ist. Vorstehend wurde bereits erwähnt, dass der Gleichspannungswandler beispielsweise als Ladungspumpe ausgestaltet ist. Der Leistungsschalter bildet einen Bestandteil des Gleichspannungswandlers beziehungsweise einer solchen Ladungspumpe. Der Leistungsschalter ist bevorzugt elektrisch zwischen dem ersten Primärstromnetzanschluss einerseits und der Sperrdiode und dem Zusatzwiderstand andererseits angeschlossen. In anderen Worten ist der Leistungsschalter über die Sperrdiode und den Zusatzwiderstand an den ersten Sekundärstromnetzanschluss elektrisch angeschlossen. Diese Beschaltung ermöglicht ebenfalls einen einfachen Aufbau des Bordnetzes, insbesondere eine kostengünstige Struktur des Gleichspannungswandlers.

Im Rahmen einer bevorzugten Weiterbildung der Erfindung kann vorgesehen sein, dass ein weiterer Leistungsschalter des Gleichspannungswandlers einerseits elektrisch zwischen dem ersten Primärstromnetzanschluss und der Sperrdiode und andererseits an dem zweiten Primärstromnetzanschluss angeschlossen ist. Über den weiteren Leistungsschalter ist insoweit die dem ersten Sekundärstromnetzanschluss abgewandte Seite der Sperrdiode elektrisch mit dem zweiten Primärstromnetzanschluss verbindbar. Auch der weitere Leistungsschalter ist bevorzugt Bestandteil der vorstehend beschriebenen Ladungspumpe und ermöglicht den bereits erwähnten kostengünstigen Aufbau des Gleichspannungswandlers.

Eine Weiterbildung der Erfindung sieht vor, dass der Isolationswächter Bestandteil einer an das Sekundärstromnetz angeschlossenen Batterie ist. Die Batterie stellt insoweit die vorstehend bereits erwähnte zweite Stromquelle dar. Sie ist Bestandteil des Sekundärstromnetzes oder zumindest an dieses angeschlossen. Die Batterie ist vorzugsweise als Hochvoltbatterie ausgestaltet. In eine solche Hochvoltbatterie ist der Isolationswächter üblicherweise bereits integriert, um eine Prüfung der Batterie selbst auf einen Isolationsfehler vornehmen zu können. Entsprechend ist kein weiterer separater Isolationswächter notwendig, weder zur Überprüfung des Sekundärstromnetzes noch zur Überprüfung des Primärstromnetzes. Das Überprüfen auf den gemeinsamen Isolationsfehler des Primärstromnetzes und des Sekundärstromnetzes ist also mit äußerst geringem hardwaretechnischem Aufwand umsetzbar.

Eine weitere bevorzugte Ausgestaltung der Erfindung sieht vor, dass die Batterie über wenigstens einen Schaltschütz an das Sekundärstromnetz angeschlossen ist. Mittels des Schaltschützes ist die Batterie von dem Sekundärstromnetz elektrisch entkoppelbar, insbesondere bezüglich eines Pols oder sogar mehrerer Pole. Insbesondere weist die Batterie zwei Pole auf, von welchen wenigstens einer, bevorzugt jedoch beide, mittels des Schaltschützes, wahlweise an das Sekundärstromnetz elektrisch angeschlossen oder von ihm entkoppelt sind. In anderen Worten sind der wenigstens eine Pol oder beide Pole der Batterie in einem ersten Schaltzustand des Schaltschützes elektrisch an das Sekundärstromnetz angeschlossen und in einem zweiten Schaltzustand von ihm separiert.

Der Schaltschütz ermöglicht das Entkoppeln der Batterie insoweit sowohl von dem Sekundärstromnetz als auch von dem Primärstromnetz. Falls der Isolationswächter Bestandteil der Batterie ist, so wird zum Überprüfen auf das Vorliegen des gemeinsamen Isolationsfehlers der Schaltschütz zum elektrischen Verbinden der Batterie mit dem Sekundärstromnetz eingestellt. Das Vorsehen des Schaltschützes zwischen der Batterie und dem Sekundärstromnetz ermöglicht das Betreiben des Bordnetzes beziehungsweise des Sekundärstromnetzes allein mit elektrischer Energie aus dem Primärstromnetz.

Eine weitere bevorzugte Ausgestaltung der Erfindung sieht vor, dass wenigstens ein Verbraucher elektrisch zwischen dem ersten Sekundärstromnetzanschluss und dem zweiten Sekundärstromnetz angeschlossen ist. Der elektrische Verbraucher liegt beispielsweise in Gestalt des vorstehend bereits erwähnten Antriebsaggregats, insbesondere also der elektrischen Maschine, vor. Die Anordnung des elektrischen Verbrauchers zwischen den Sekundärstromnetzanschlüssen des Sekundärstromnetzes ermöglicht das Betreiben des Verbrauchers allein mit elektrischer Energie, die der zweiten Stromquelle beziehungsweise der Batterie entnommen ist. Wahlweise kann der Verbraucher zudem mit elektrischer Energie aus dem Primärstromnetz betrieben werden, welcher über den Gleichspannungswandler für das Sekundärstromnetz bereitgestellt wird.

Eine bevorzugte weitere Ausführungsform der Erfindung sieht vor, dass in dem Primärstromnetz eine als Brennstoffzelle ausgebildete Stromquelle vorliegt. Die vorstehend bereits erwähnte erste Stromquelle ist als die Brennstoffzelle ausgestaltet. Der von der Brennstoffzelle bereitgestellte elektrische Strom kann zum Betreiben des Verbrauchers in dem Sekundärstromkreis und/oder zum Laden der Batterie herangezogen werden. Mithilfe der Brennstoffzelle kann eine zuverlässige und dauerhafte Versorgung des Bordnetzes mit elektrischem Strom sichergestellt werden.

Schließlich kann im Rahmen einer weiteren Ausgestaltung der Erfindung vorgesehen sein, dass eine Induktivität mit der Sperrdiode in Reihe geschaltet ist. Die Induktivität ist ebenso wie die Sperrdiode Bestandteil des Gleichspannungswandlers. Sie dient zur Zwischenspeicherung von elektrischer Energie, welche aus dem Primärstromnetz bei der ersten Spannung aufgenommen wird. Anschließend werden der Leistungsschalter und/oder der weitere Leistungsschalter derart eingestellt, dass die in der Induktivität zwischengespeicherte elektrische Energie bei der zweiten Spannung dem Sekundärstromnetz bereitgestellt wird. Insgesamt ergibt sich aus den vorstehenden Ausführungen eine besonders kostengünstige Realisierung des Gleichspannungswandlers, welche zudem das Überprüfen des Bordnetzes auf den gemeinsamen Isolationsfehler des Primärstromnetzes und des Sekundärstromnetzes mittels eines einzigen Isolationswächters ermöglicht.

Die Erfindung betrifft weiterhin ein Verfahren zum Betreiben eines Bordnetzes für ein Kraftfahrzeug, insbesondere eines Bordnetzes gemäß den vorstehenden Ausführungen, wobei das Bordnetz über ein Primärstromnetz und ein an das Primärstromnetz über einen Gleichspannungswandler elektrisch angeschlossenes Sekundärstromnetz verfügt, wobei das Primärstromnetz und das Sekundärstromnetz über eine Sperrdiode des Gleichspannungswandlers aneinander angeschlossen sind und die Sperrdiode ihre Durchlassrichtung von dem Primärstromnetz in Richtung des Sekundärstromnetzes aufweist, und wobei dem Sekundärstromnetz ein einen Messwiderstand aufweisender Isolationswächter zum Ermitteln eines Isolationsfehlers zugeordnet ist. Dabei ist vorgesehen, dass der Sperrdiode zu ihrer Überbrückung ein Zusatzwiderstand parallel geschaltet ist und mittels des Isolationswächters ein gemeinsamer Isolationsfehler des Primärstromnetzes und des Sekundärstromnetzes ermittelt wird.

Auf die Vorteile einer derartigen Ausgestaltung des Bordnetzes sowie einer solchen Vorgehensweise wurde bereits eingegangen. Sowohl das Bordnetz als auch das Verfahren zu seinem Betreiben können gemäß den vorstehenden Ausführungen weitergebildet sein, sodass insoweit auf diese verwiesen wird.

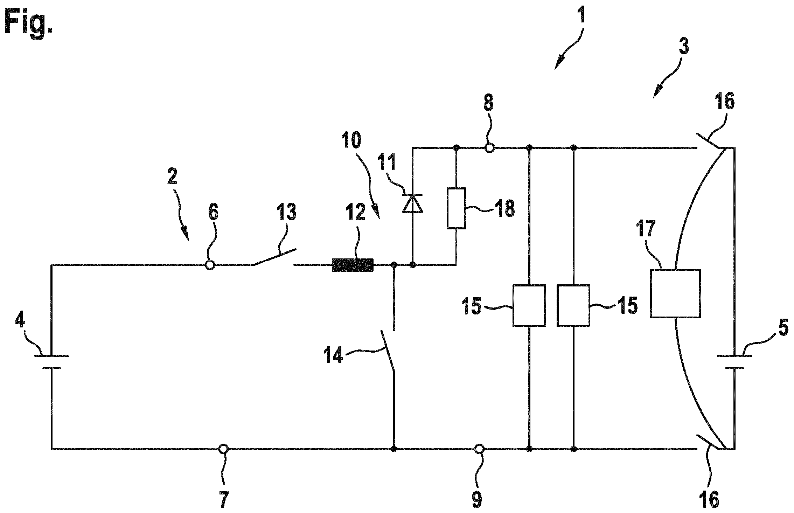

Die Erfindung wird nachfolgend anhand der in der Zeichnung dargestellten Ausführungsbeispiele näher erläutert, ohne dass dabei eine Beschränkung der Erfindung erfolgt. Dabei zeigt die einzige
- Figur: eine schematische Darstellung eines Bordnetzes für ein Kraftfahrzeug, welches ein Primärstromnetz und ein Sekundärstromnetz aufweist.

Die Figur zeigt eine schematische Darstellung eines Bordnetzes 1 für ein Kraftfahrzeug. Das Bordnetz 1 weist ein Primärstromnetz 2 und ein Sekundärstromnetz 3 auf. In dem Primärstromnetz 2 ist eine erste Stromquelle 4 vorgesehen, welche bevorzugt als Brennstoffzelle ausgestaltet ist. In dem Sekundärstromnetz 3 ist hingegen eine zweite Stromquelle 5 vorgesehen, welche in Form einer Batterie vorliegt. Das Primärstromnetz 2 und das Sekundärstromnetz 3 sind zumindest zeitweise elektrisch miteinander verbunden. Hierbei weist das Primärstromnetz 2 einen ersten Primärstromnetzanschluss 6 und einen zweiten Primärstromnetzanschluss 7 auf, wohingegen das Sekundärstromnetz 3 über einen ersten Sekundärstromnetzanschluss 8 und einen zweiten Sekundärstromnetzanschluss 9 verfügt.

Die beiden Stromnetze 2,3 sind über einen Gleichspannungswandler 10 miteinander verbunden, der an den ersten Primärstromnetzanschluss 6, den zweiten Primärstromnetzanschluss 7, den ersten Sekundärstromnetzanschluss 8 und den zweiten Sekundärstromnetzanschluss 9 angeschlossen ist. Der Gleichspannungswandler 10 weist eine Sperrdiode 11, eine Induktivität 12, einen Leistungsschalter 13 und einen weiteren Leistungsschalter 14 auf. Der Leistungsschalter 13 ist an den ersten Primärstromnetzanschluss 6 angeschlossen. Die Induktivität 12 ist auf der dem ersten Primärstromnetzanschluss 6 abgewandten Seite des Leistungsschalters 13 an diesen angeschlossen.

Auf der dem Leistungsschalter 13 abgewandten Seite der Induktivität 12 ist wiederum die Sperrdiode 11 an diese angeschlossen, wohingegen die Sperrdiode 11 auf ihrer der Induktivität 12 abgewandten Seite an den ersten Sekundärstromnetzanschluss 8 angeschlossen ist. Der Leistungsschalter 14 ist einerseits zwischen der Induktivität 12 und der Sperrdiode 11 und andererseits an den zweiten Primärstromnetzanschluss 7 und den zweiten Sekundärstromnetzanschluss 9 angeschlossen. Der zweite Primärstromnetzanschluss 7 und der zweite Sekundärstromnetzanschluss 9 sind zudem unmittelbar elektrisch miteinander verbunden.

In dem Sekundärstromnetz 3 ist beispielsweise wenigstens ein Verbraucher 15, in dem hier dargestellten Ausführungsbeispiel zwei Verbraucher 15, angeordnet. Der Verbraucher 15 ist hierbei einerseits an den ersten Sekundärstromnetzanschluss 8 und andererseits an den zweiten Sekundärstromnetzanschluss 9 angeschlossen, vorzugsweise permanent. Einer der Verbraucher 15 ist beispielsweise als Leistungselektronik für die Antriebseinrichtung, insbesondere die elektrische Maschine, ausgestaltet. Ein anderer der Verbraucher 15 kann hingegen als weiterer Gleichspannungswandler ausgestaltet sein, über welchen ein Niederspannungsbordnetz des Kraftfahrzeugs mit elektrischem Strom bei einer Spannung versorgt wird, die von der Spannung in dem Primärstromnetz 2 und/oder der Spannung in dem Sekundärstromnetz 3 verschieden ist.

Die Stromquelle 5 ist vorzugsweise über einen Schaltschütz 16 an das Sekundärstromnetz 3 beziehungsweise die beiden Sekundärstromnetzanschlüsse 8,9 elektrisch angeschlossen. Mithilfe des Schaltschützes 16 ist insoweit die Stromquelle 5 von diesen elektrisch entkoppelbar. Weiterhin ist ein Isolationswächter 17 vorgesehen, der zur Ermittlung eines Isolationsfehlers in dem Bordnetz 1 dient. In dem hier dargestellten Ausführungsbeispiel ist der Isolationswächter 17 parallel zu der Stromquelle 5 in dem Sekundärstromnetz 3 angeordnet. In einer bevorzugten alternativen Ausgestaltung ist der Isolationswächter 17 in die Stromquelle 5 integriert, bildet also einen Bestandteil von dieser.

Um mithilfe des Isolationswächters 17 nicht nur den Isolationsfehler in dem Sekundärstromnetz 3 ermitteln zu können, ist der Sperrdiode 11 ein Zusatzwiderstand 18 parallel geschaltet. Der Zusatzwiderstand 18 ist vorzugsweise hochohmig, weist also einen Widerstand von mindestens 1 Kiloohm, mindestens 5 Kiloohm, mindestens 10 Kiloohm, mindestens 50 Kiloohm oder mindestens 100 Kiloohm auf. Der Widerstandswert des Zusatzwiderstands 18 wird vorzugsweise bei der Auslegung eines hier nicht dargestellten Messwiderstands des Isolationswächters 17 berücksichtigt. Insbesondere wird der Messwiderstand mit einem Widerstandswert ausgelegt, welcher um den Widerstandswert des Zusatzwiderstands 18 verringert ist.

Zum Bestimmen des gemeinsamen Isolationsfehlers des Primärstromnetzes 2 und des Sekundärstromnetzes 3 wird der Schaltschütz 16 zum elektrischen Verbinden der Stromquelle 5 mit dem Sekundärstromnetz 3 und mithin mit dem Primärstromnetz 2 angesteuert. Anschließend wird der Isolationswächter 17 derart angesteuert, dass das Bordnetz 1 auf das Vorliegen des gemeinsamen Isolationsfehlers überprüft wird.

Die beschriebene Ausgestaltung des Bordnetzes 1 hat den Vorteil, dass auf einen zusätzlichen Isolationswächter verzichtet werden kann, welcher allein dem Ermitteln eines Isolationsfehlers in dem Primärstromnetz 2 dient. Vielmehr kann mit einem einzigen Isolationswächter 17 auf das Vorliegen eines Isolationsfehlers in dem gesamten Bordnetz 1, nämlich dem Primärstromnetz 2 und dem Sekundärstromnetz 3, geprüft werden. Entsprechend ist ein geringerer Aufwand für die Realisierung des Bordnetzes 1 aufzubringen. Auch entfällt ein funktionaler Aufwand während des Prüfens auf das Vorliegen des Isolationsfehlers, weil ansonsten mehrere in dem Bordnetz 1 vorliegende Isolationswächter nicht gleichzeitig auf einen Isolationsfehler testen dürfen, um sich nicht gegenseitig zu beeinflussen.

## Patentansprüche

1. Bordnetz (1) für ein Kraftfahrzeug, mit einem Primärstromnetz (2) und einem an das Primärstromnetz (2) über einen Gleichspannungswandler (10) elektrisch angeschlossenen Sekundärstromnetz (3), wobei das Primärstromnetz (2) und das Sekundärstromnetz (3) über eine Sperrdiode (11) des Gleichspannungswandlers (10) aneinander angeschlossen sind und die Sperrdiode (11) ihre Durchlassrichtung von dem Primärstromnetz (2) in Richtung des Sekundärstromnetzes (3) aufweist, und wobei dem Sekundärstromnetz (3) ein einen Messwiderstand aufweisender Isolationswächter (17) zur Ermittlung eines Isolationsfehlers zugeordnet ist, **dadurch gekennzeichnet, dass** der Sperrdiode (11) zu ihrer Überbrückung ein Zusatzwiderstand (18) parallel geschaltet ist, sodass mittels des Isolationswächters (17) ein gemeinsamer Isolationsfehler des Primärstromnetzes (2) und des Sekundärstromnetzes (3) ermittelbar ist.

2. Bordnetz nach Anspruch 1, **dadurch gekennzeichnet, dass** das Primärstromnetz (2) einen ersten Primärstromnetzanschluss (6) und einen zweiten Primärstromnetzanschluss (7) sowie das Sekundärstromnetz (3) einen ersten Sekundärstromnetzanschluss (8) und einen zweiten Sekundärstromnetzanschluss (9) aufweist, wobei der erste Primärstromnetzanschluss (6) und der erste Sekundärstromnetzanschluss (8) über die Sperrdiode (11) und den Zusatzwiderstand (18) und der zweite Primärstromnetzanschluss (8) und der zweite Sekundärstromnetzanschluss (9) unmittelbar aneinander angeschlossen sind.

3. Bordnetz nach einem der vorhergehenden Ansprüche, **dadurch gekennzeichnet, dass** zwischen dem ersten Primärstromnetzanschluss (6) und dem ersten Sekundärstromnetzanschluss (8) ein Leistungsschalter (13) des Gleichspannungswandlers (10) in Reihe mit der Sperrdiode (11) elektrisch angeschlossen ist.

4. Bordnetz nach einem der vorhergehenden Ansprüche, **dadurch gekennzeichnet, dass** ein weiterer Leistungsschalter (14) des Gleichspannungswandlers (10) einerseits elektrisch zwischen dem ersten Primärstromnetzanschluss (6) und der Sperrdiode (11) und andererseits an den zweiten Primärstromnetzanschluss (7) angeschlossen ist.

5. Bordnetz nach einem der vorhergehenden Ansprüche, **dadurch gekennzeichnet, dass** der Isolationswächter (17) Bestandteil einer an das Sekundärstromnetz (3) angeschlossene Batterie (5) ist.

6. Bordnetz nach einem der vorhergehenden Ansprüche, **dadurch gekennzeichnet, dass** die Batterie (5) über wenigstens einen Schaltschütz (16) an das Sekundärstromnetz (3) angeschlossen ist.

7. Bordnetz nach einem der vorhergehenden Ansprüche, **dadurch gekennzeichnet, dass** wenigstens ein Verbraucher (15) elektrisch zwischen dem ersten Sekundärstromnetzanschluss (8) und dem zweiten Sekundärstromnetzanschluss (9) angeschlossen ist.

8. Bordnetz nach einem der vorhergehenden Ansprüche, **dadurch gekennzeichnet, dass** in dem Primärstromnetz (2) eine als Brennstoffzelle ausgebildete Stromquelle (4) vorliegt.

9. Bordnetz nach einem der vorhergehenden Ansprüche, **dadurch gekennzeichnet, dass** eine Induktivität (12) mit der Sperrdiode (11) in Reihe geschaltet ist.

10. Verfahren zum Betreiben eines Bordnetzes (1) für ein Kraftfahrzeug, insbesondere eines Bordnetzes (1) nach einem oder mehreren der vorhergehenden Ansprüche, wobei das Bordnetz (1) über ein Primärstromnetz (2) und ein an das Primärstromnetz (2) über einen Gleichspannungswandler (10) elektrisch angeschlossenes Sekundärstromnetz (3) verfügt, wobei das Primärstromnetz (2) und das Sekundärstromnetz (3) über eine Sperrdiode (11) des Gleichspannungswandlers (10) aneinander angeschlossen sind und die Sperrdiode (11) ihre Durchlassrichtung von dem Primärstromnetz (2) in Richtung des Sekundärstromnetzes (3) aufweist, und wobei dem Sekundärstromnetz (3) ein einen Messwiderstand aufweisender Isolationswächter (17) zum Ermitteln eines Isolationsfehlers zugeordnet ist, **dadurch gekennzeichnet, dass** der Sperrdiode (11) zu ihrer Überbrückung ein Zusatzwiderstand (18) parallel geschaltet ist und mittels des Isolationswächters (17) ein gemeinsamer Isolationsfehler des Primärstromnetzes (2) und des Sekundärstromnetzes (3) ermittelt wird.

## Claims

1. Onboard electrical system (1) for a motor vehicle, having a primary power supply network (2) and a secondary power supply network (3) electrically connected to the primary power supply network (2) via a DC-DC converter (10), wherein the primary power supply network (2) and the secondary power supply network (3) are connected to one another via a blocking diode (11) of the DC-DC converter (10) and the blocking diode (11) has its forward direction from the primary power supply network (2) toward the secondary power supply network (3), and wherein an insulation monitoring device (17) having a measuring resistor is associated with the secondary power supply network (3) for determining an insulation fault, **characterised in that** an additional resistor (18) is connected in parallel with the blocking diode (11) for the bridging thereof, such that by means of the insulation monitoring device (17) an insulation fault common to the primary power supply network (2) and the secondary power supply network (3) can be determined.

2. Onboard electrical system according to claim 1, **characterised in that** the primary power supply network (2) has a first primary power supply network connection (6) and a second primary power supply network connection (7) and the secondary power supply network (3) has a first secondary power supply network connection (8) and a second secondary power supply network connection (9), wherein the first primary power supply network connection (6) and the first secondary power supply network connection (8) are connected via the blocking diode (11) and the additional resistor (18) and the second primary power supply network connection (8) and the second secondary power supply network connection (9) are directly connected to one another.

3. Onboard electrical system according to any of the preceding claims, **characterised in that** a circuit breaker (13) of the DC-DC converter (10) is electrically connected in series with the blocking diode (11) between the first primary power supply network connection (6) and the first secondary power supply network connection (8).

4. Onboard electrical system according to any of the preceding claims, **characterised in that** a further circuit breaker (14) of the DC-DC converter (10) is electrically connected on the one hand between the first primary power supply network connection (6) and the blocking diode (11) and on the other hand to the second primary power supply network connection (7).

5. Onboard electrical system according to any of the preceding claims, **characterised in that** the insulation monitoring device (17) is a component of a battery (5) connected to the secondary power supply network (3).

6. Onboard electrical system according to any of the preceding claims, **characterised in that** the battery (5) is connected to the secondary power supply network (3) via at least one contactor (16).

7. Onboard electrical system according to any of the preceding claims, **characterised in that** at least one load (15) is electrically connected between the first secondary power supply network connection (8) and the second secondary power supply network connection (9).

8. Onboard electrical system according to any of the preceding claims, **characterised in that** a power source (4) in the form of a fuel cell is present in the primary power supply network (2).

9. Onboard electrical system according to any of the preceding claims, **characterised in that** an inductor (12) is connected in series with the blocking diode (11).

10. Method for operating an onboard electrical system (1) for a motor vehicle, in particular an onboard electrical system (1) according to one or more of the preceding claims, wherein the onboard electrical system (1) has a primary power supply network (2) and a secondary power supply network (3) electrically connected to the primary power supply network (2) via a DC-DC converter (10), wherein the primary power supply network (2) and the secondary power supply network (3) are connected to one another via a blocking diode (11) of the DC-DC converter (10) and the blocking diode (11) has its forward direction from the primary power supply network (2) toward the secondary power supply network (3), and wherein an insulation monitoring device (17) having a measuring resistor is associated with the secondary power supply network (3) for determining an insulation fault, **characterised in that** an additional resistor (18) is connected in parallel with the blocking diode (11) for the bridging thereof and by means of the insulation monitoring device (17) an insulation fault common to the primary power supply network (2) and the secondary power supply network (3) is determined.

## Revendications

1. Réseau de bord (1) pour un véhicule automobile, avec un réseau électrique primaire (2) et un réseau électrique secondaire (3) raccordé électriquement au système d'alimentation électrique primaire (2) par l'intermédiaire d'un convertisseur de courant continu (10), dans lequel le réseau électrique primaire (2) et le réseau électrique secondaire (3) sont raccordés entre eux par l'intermédiaire d'une diode de blocage (11) du convertisseur de courant continu (10) et la diode de blocage (11) présente son sens de passage du réseau électrique primaire (2) en direction du réseau électrique secondaire (3), et dans lequel un contrôleur d'isolement (17) présentant une résistance de mesure est affecté au réseau électrique secondaire (3) pour déterminer un défaut d'isolement, **caractérisé en ce qu'**une résistance supplémentaire (18) est montée en parallèle à la diode de blocage (11) pour son pontage, de sorte qu'un défaut d'isolement commun du réseau électrique primaire (2) et du réseau électrique secondaire (3) peut être déterminé au moyen du contrôleur d'isolement (17).

2. Réseau de bord selon la revendication 1, **caractérisé en ce que** le réseau électrique primaire (2) présente un premier raccord de réseau électrique primaire (6) et un second raccord de réseau électrique primaire (7) et le réseau électrique secondaire (3) présente un premier raccord de réseau électrique secondaire (8) et un second raccord de réseau électrique secondaire (9), dans lequel le premier raccord de réseau électrique primaire (6) et le premier raccord de réseau électrique secondaire (8) sont raccordés directement entre eux par l'intermédiaire de la diode de blocage (11) et de la résistance supplémentaire (18), et le second raccord de réseau électrique primaire (8) et le second raccord de réseau électrique secondaire (9) sont raccordés directement entre eux.

3. Réseau de bord selon l'une quelconque des revendications précédentes, **caractérisé en ce qu'**un interrupteur de puissance (13) du convertisseur de courant continu (10) est raccordé électriquement en série avec la diode de blocage (11) entre le premier raccord de réseau électrique primaire (6) et le premier raccord de réseau électrique secondaire (8).

4. Réseau de bord selon l'une quelconque des revendications précédentes, **caractérisé en ce qu'**un autre interrupteur de puissance (14) du convertisseur de courant continu (10) est raccordé électriquement d'une part entre le premier raccord de réseau électrique primaire (6) et la diode de blocage (11) et d'autre part au second raccord de réseau électrique primaire (7).

5. Réseau de bord selon l'une quelconque des revendications précédentes, **caractérisé en ce que** le contrôleur d'isolement (17) est une partie constituante d'une batterie (5) raccordée au réseau électrique secondaire (3).

6. Réseau de bord selon l'une quelconque des revendications précédentes, **caractérisé en ce que** la batterie (5) est raccordée au réseau électrique secondaire (3) par l'intermédiaire d'au moins un contacteur (16).

7. Réseau de bord selon l'une quelconque des revendications précédentes, **caractérisé en ce qu'**au moins un consommateur (15) est raccordé électriquement entre le premier raccord de réseau électrique secondaire (8) et le second raccord de réseau électrique secondaire (9).

8. Réseau de bord selon l'une quelconque des revendications précédentes, **caractérisé en ce qu'**une source de courant (4) conçue en tant que pile à combustible est présente dans le réseau électrique primaire (2).

9. Réseau de bord selon l'une quelconque des revendications précédentes, **caractérisé en ce qu'**une inductance (12) est montée en série avec la diode de blocage (11).

10. Procédé de fonctionnement d'un réseau de bord (1) pour un véhicule automobile, en particulier un réseau de bord (1) selon une ou plusieurs des revendications précédentes, dans lequel le réseau de bord (1) présente un réseau électrique primaire (2) et un réseau électrique secondaire (3) raccordé électriquement au système d'alimentation électrique primaire (2) par l'intermédiaire d'un convertisseur de courant continu (10), dans lequel le réseau électrique primaire (2) et le réseau électrique secondaire (3) sont raccordés entre eux par l'intermédiaire d'une diode de blocage (11) du convertisseur de courant continu (10) et la diode de blocage (11) présente son sens de passage du réseau électrique primaire (2) en direction du réseau électrique secondaire (3), et dans lequel un contrôleur d'isolement (17) présentant une résistance de mesure est affecté au réseau électrique secondaire (3) pour déterminer un défaut d'isolement, **caractérisé en ce qu'**une résistance supplémentaire (18) est montée en parallèle à la diode de blocage (11) pour son pontage, et qu'un défaut d'isolement commun du réseau électrique primaire (2) et du réseau électrique secondaire (3) est déterminé au moyen du contrôleur d'isolement (17).
